# DEMANDE DE BREVET EUROPEEN

(11) **EP 4 300 420 A1**
(43) Date de publication de la demande: **03.01.2024**
(21) Numéro de dépôt: 23172349.5
(22) Date de dépôt: 09.05.2023
(51) Int. Cl.: G06T 7/20, G06T 5/50

(54) **PROCÉDÉ DE MESURE DE VITESSE SEMI-AUTOMATIQUE D'UN VÉHICULE À PARTIR D'UNE BANQUE D'IMAGES, PRODUIT PROGRAMME D'ORDINATEUR ET DISPOSITIF ASSOCIÉS**

(30) Priorité: 30.06.2022 FR 2206623
(71) Demandeur: IDEMIA Identity & Security France, 92400 Courbevoie (FR)
(72) Inventeur: DOMINGUES, Domingues, 92400 Courbevoie (FR); KROMWEL, Marie, 92400 Courbevoie (FR); HARBI, Rachid, 92400 Courbevoie (FR); GUIDON, Eric, 92400 Courbevoie (FR)
(74) Mandataire: Idemia

(57) **Abrégé**

L'invention porte sur un procédé de mesure de vitesse d'un véhicule comprenant :
- une étape de première sélection d'une première image du véhicule à un premier instant de temps,
- une étape de deuxième sélection d'une deuxième image du véhicule un intervalle de temps prédéterminé après le premier instant de temps,
- une étape de fusion en transparence de la première image avec la deuxième image, en une image fusionnée (if) comprenant un premier véhicule (V1) et un deuxième véhicule (V2),
- une étape de sélection d'un premier pixel (P1) du premier véhicule (V1) et d'un deuxième pixel (P2) du deuxième véhicule (V2),
- une étape de calcul de la vitesse du véhicule en fonction du premier pixel (P1), du deuxième pixel (P2), de l'intervalle de temps prédéterminé et d'une fonction mathématique.

## Description

L'invention concerne le domaine du contrôle routier de la vitesse des véhicules sur une route.

Il est connu de l'état de la technique de contrôler la vitesse des véhicules sur une route avec un dispositif de contrôle tel qu'un radar autoroutier. Un tel dispositif de contrôle comprend un dispositif de prise de vue. Lorsqu'une infraction de vitesse est détectée, le dispositif de contrôle acquiert plusieurs images horodatées du véhicule en infraction pour preuve de l'infraction.

Le conducteur du véhicule en infraction peut contester l'infraction. La vitesse détectée par le dispositif de contrôle lors de l'infraction doit être vérifiée par une autre méthode.

Dans certains pays, une règlementation impose que le dispositif de contrôle permette l'obtention d'une deuxième mesure de vitesse indépendamment d'une mesure de première vitesse. Par exemple la première vitesse est déterminée par un capteur de vitesse. Alors, la deuxième vitesse doit être obtenue sans utiliser les données du capteur de vitesse. La règlementation impose une précision sur la mesure de deuxième vitesse, parfois même plus élevée que la mesure de la première vitesse.

L'état de l'art propose par exemple, pour mesurer la vitesse du véhicule indépendamment des données du capteur de vitesse, d'utiliser les images acquises par le dispositif de prise de vue du dispositif de contrôle. Deux images horodatées distinctes sont sélectionnées. Des marquages sont effectués sur la route pour estimer l'emplacement du véhicule sur les deux images. La distance entre les marquages est mesurée. La vitesse du véhicule est déduite à partir de la distance entre les marquages et de l'intervalle de temps entre les deux images horodatées. Cette méthode nécessite une expertise du site de l'infraction et n'est ni facile ni rapide à mettre en oeuvre.

Une autre pratique consiste à estimer la vitesse d'un véhicule à partir de règles de proportionnalité dans les images, en comparant le déplacement du véhicule à la taille d'une des roues dudit véhicule. Une telle méthode n'est pas précise.

Une étude statistique en fonction de la position d'autres véhicules est une autre méthode possible. Cependant, cette méthode repose sur des données qu'on ne peut pas vérifier de manière certaine.

L'invention vise à résoudre les problèmes susmentionnés en proposant une méthode fiable, ergonomique, simple, précise et rapide.

L'invention porte sur un procédé de mesure de vitesse semi-automatique d'un véhicule sur une route, à l'aide d'un calculateur et d'une interface homme-machine, à partir d'une banque d'images acquises par un dispositif de contrôle de vitesse sur la route par rapport à une ligne d'infraction virtuelle localisée dans un plan de la route, un point image dans une image correspondant à un point réel dans l'environnement réel du dispositif de contrôle, le calculateur disposant d'une fonction mathématique permettant de déterminer un point réel à partir d'un point image et d'un plan affine contenant ledit point réel, le procédé comprenant les étapes suivantes :
- une étape de première sélection, dans laquelle le calculateur sélectionne dans la banque d'images, une première image comprenant le véhicule localisé en une première position par rapport à la ligne d'infraction et correspondant à une acquisition par le dispositif de contrôle à un premier instant de temps,
- une étape de deuxième sélection, dans laquelle le calculateur sélectionne dans la banque d'images, une deuxième image comprenant le véhicule localisé en une deuxième position par rapport à la ligne d'infraction et correspondant à une acquisition par le dispositif de contrôle à un deuxième instant de temps distant d'un intervalle de temps prédéterminé du premier instant de temps,
- une étape de fusion, dans laquelle le calculateur génère une image fusionnée comprenant une superposition en transparence de la première image avec la deuxième image, l'image fusionnée comprenant un premier véhicule correspondant au véhicule en la première position et un deuxième véhicule correspondant au véhicule en la deuxième position,
- une étape de sélection de pixels, dans laquelle le calculateur enregistre un premier pixel du premier véhicule et un deuxième pixel du deuxième véhicule sélectionnés dans l'image fusionnée par un opérateur via l'interface homme-machine,
- une étape de calcul, dans laquelle le calculateur détermine la vitesse du véhicule en fonction du premier pixel, du deuxième pixel, de l'intervalle de temps prédéterminé et de la fonction mathématique.

Selon un aspect de l'invention, le premier pixel est situé en une première localisation sur le premier véhicule et le deuxième pixel est situé en une deuxième localisation sur le deuxième véhicule, la première localisation et la deuxième localisation étant identiques.

Selon un aspect de l'invention, le premier pixel et le deuxième pixel sont localisés dans le plan de la route, le plan affine étant le plan de la route.

Selon un aspect de l'invention, le premier pixel et le deuxième pixel sont localisés dans un plan de mesure parallèle au plan de la route, le procédé comprenant en outre une étape d'enregistrement dans laquelle le calculateur enregistre une hauteur à laquelle est localisé le plan de mesure par rapport au plan de la route, le plan affine étant le plan de mesure.

Selon un aspect de l'invention, la hauteur est renseignée par un opérateur via l'interface homme-machine.

Selon un aspect de l'invention, l'étape de sélection de pixels comprend une étape de grossissement de l'image fusionnée.

Selon un aspect de l'invention, la superposition en transparence comprend une première mise en transparence de la première image, une deuxième mise en transparence de la deuxième image et une superposition des images issues des première et de deuxième mises en transparence.

Selon un aspect de l'invention, le procédé de mesure comprend une étape de validation dans laquelle le calculateur calcule une variation de la vitesse du véhicule déterminée selon l'étape de calcul par rapport à une vitesse préalablement déterminée par le dispositif de contrôle, le calculateur validant la vitesse déterminée par le dispositif de contrôle si ladite variation est inférieure ou égale à un seuil prédéterminé.

L'invention porte également sur un produit programme d'ordinateur comprenant les instructions de programme mettant en oeuvre les étapes du procédé de mesure lorsque les instructions de programme sont exécutées par un ordinateur.

L'invention porte également sur un dispositif de mesure de vitesse d'un véhicule comprenant une interface homme-machine et un calculateur apte à mettre en oeuvre les étapes du procédé de mesure à partir d'une banque d'images acquises par un dispositif de contrôle.

D'autres avantages et caractéristiques de l'invention apparaîtront à la lecture de la description et des dessins.
La figure 1 représente une route sur laquelle circule un véhicule et comprenant un dispositif de contrôle, et une image acquise par ledit dispositif de contrôle.
La figure 2 illustre les étapes du procédé de l'invention.
La figure 3a représente une image prise par le dispositif de contrôle à un premier instant de temps.
La figure 3b représente une image prise par le dispositif de contrôle à un deuxième instant de temps.
La figure 4 représente une image fusionnée à partir des première et deuxième images.
La figure 5a représente une sélection de deux pixels dans l'image fusionnée de la figure 4, selon un premier mode de sélection.
La figure 5b représente une sélection de deux pixels dans l'image fusionnée de la figure 4, selon un deuxième mode de sélection.
La figure 6 illustre un dispositif de mesure de vitesse d'un véhicule à partir d'une banque d'images acquises par le dispositif de contrôle.
La figure 7 illustre le tracé d'un modèle géométrique de la route dans l'image fusionnée.

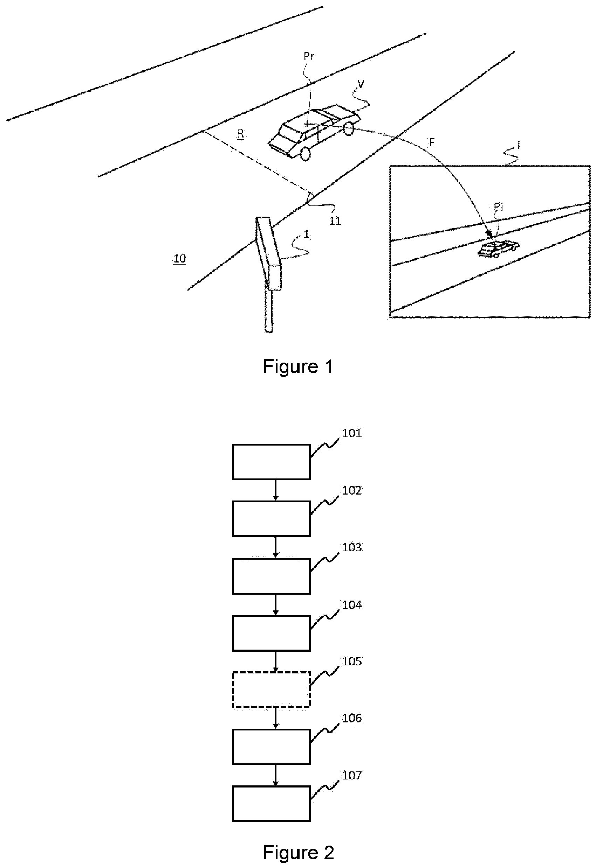

La figure 1 illustre une route 10 comprenant un dispositif de contrôle 1 et un véhicule V circulant sur ladite route 10.

Le dispositif de contrôle 1 est un dispositif de contrôle routier.

Le dispositif de contrôle 1 est un dispositif de contrôle de vitesse sur la route 10.

Par exemple le dispositif de contrôle 1 est localisé sur le bord de la route 10.

Par exemple le dispositif de contrôle 1 est localisé au-dessus de la route 10.

Le dispositif de contrôle 1 est apte à contrôler la vitesse d'un véhicule V circulant sur la route 10 tel qu'une automobile, un vélo, une trottinette, un camion, un tracteur.

Le dispositif de contrôle 1 comprend un capteur de vitesse apte à mesurer une vitesse du véhicule V par rapport une ligne d'infraction virtuelle 11.

Par exemple, la vitesse du véhicule V est mesurée sur la ligne d'infraction virtuelle 11, c'est-à-dire lorsque le véhicule V est localisé sur la ligne d'infraction virtuelle 11, par exemple au moment où les roues arrières du véhicule V sont sur de la ligne d'infraction virtuelle 11

La route 10 est définie par un plan général dit plan de route R. Il est fait approximation que la route 10 est plane et contenue dans le plan de route R.

Le capteur de vitesse comprend par exemple un capteur radar, un capteur lidar, ou une combinaison d'un capteur radar et d'un capteur lidar.

Le dispositif de contrôle 1 comprend un dispositif de prise de vue apte à acquérir des images i du véhicule V circulant sur ladite route 10 par rapport à une ligne d'infraction virtuelle 11 localisée dans le plan de la route R.

Un point réel Pr dans l'environnement réel du dispositif de contrôle 1 correspond à un point image Pi dans une image i acquise par le dispositif de prise de vue du dispositif de contrôle 1.

Un point réel Pr est référencé dans un référentiel terrestre d'origine par exemple un point de la route.

Un point image Pi est référencé dans un repère image d'origine par exemple un point localisé sur la ligne d'infraction 11, le centre de l'image i, ou un coin de l'image i.

Un point réel Pr localisé sur le véhicule V dans l'environnement réel du dispositif de contrôle 1 correspond à un point image Pi localisé sur le véhicule V dans une image i acquise par le dispositif de prise de vue du dispositif de contrôle 1.

Le dispositif de contrôle 1 est calibré et aligné par rapport à la route 10 tel qu'il est connu une fonction mathématique F permettant de déterminer un point réel Pr à partir d'un point image Pi et d'un plan affine contenant ledit point réel Pr.

En effet, à l'installation du dispositif de contrôle 1 sur la route 10, le dispositif de prise de vue est calibré et aligné par rapport à la route 10, prenant en compte des paramètres intrinsèques du dispositif de prise de vue, des données topographiques de l'environnement du dispositif de contrôle, ce qui permet de déterminer ladite fonction mathématique F.

La figure 2 illustre les étapes du procédé de mesure de l'invention permettant une mesure de vitesse semi-automatique du véhicule V circulant sur une route 10, à l'aide d'un calculateur disposant de ladite fonction mathématique F, d'une interface homme-machine, et d'une banque d'images i acquises par le dispositif de contrôle 1.

Le calculateur est par exemple un ordinateur, une tablette ou un téléphone.

L'interface homme-machine comprend par exemple un écran relié au calculateur, tactile, ou connecté à une souris et un clavier.

Par exemple, la banque d'images i comprend une pluralité d'images du véhicule V.

Par exemple, la banque d'images i comprend plusieurs pluralités d'images i, chaque pluralité d'images i étant associées à un véhicule V.

Par exemple, une pluralité d'images i est associée à une infraction d'un véhicule V.

Par exemple, la banque d'images i comprend une pluralité d'images associées à une infraction de vitesse d'un véhicule V, mesurée sur la ligne d'infraction 11.

Le procédé de mesure de l'invention comprend les étapes suivantes :
- une étape de première sélection 101,
- une étape de deuxième sélection 102,
- une étape de fusion 103,
- une étape de sélection de pixels 104,
- une étape d'enregistrement 105 optionnelle,
- une étape de calcul 106,
- une étape de validation 107.

Selon l'étape de première sélection 101, le calculateur sélectionne dans la banque d'images i, une première image i1 comprenant le véhicule V localisé en une première position par rapport à la ligne d'infraction 11 et correspondant à une acquisition par le dispositif de contrôle 1, en particulier par le dispositif de prise de vue du dispositif de contrôle 1, à un premier instant de temps.

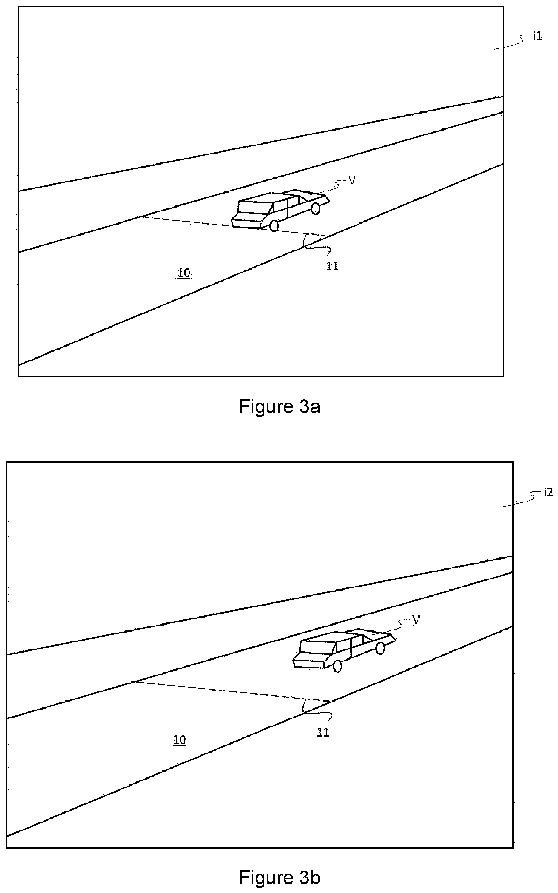

La figure 3a représente un exemple de première image i1.

La première image i1 comprend le véhicule V en une première position sur la route 10. Dans la première position, le véhicule V vient de franchir la ligne d'infraction. Les roues arrières du véhicule V sont localisées sur la ligne d'infraction 11.

La banque d'images i comprend des images horodatées. Le premier instant de temps est associé à l'horodatage de la première image i1.

Selon l'étape de première sélection 102, le calculateur sélectionne dans la banque d'images i, une deuxième image i2 comprenant le véhicule V localisé en une deuxième position par rapport à la ligne d'infraction 11 et correspondant à une acquisition par le dispositif de contrôle 1 à un deuxième instant de temps distant d'un intervalle de temps prédéterminé du premier instant de temps.

Par exemple, l'intervalle de temps est compris entre 400 millisecondes et 500 millisecondes.

Par exemple, l'intervalle de temps est égal à 462 millisecondes.

La figure 3b représente un exemple de deuxième image i2.

La deuxième image i2 comprend le véhicule V en une deuxième position sur la route 10. Dans la deuxième position, le véhicule V est localisé à une distance de la ligne d'infraction 11 correspondant à une distance parcourue par e véhicule V pendant l'intervalle de temps prédéterminé.

La banque d'images i comprend des images horodatées. La deuxième image i2 est telle que son horodatage correspond à un horodatage distant de l'intervalle de temps prédéterminé de l'horodatage de la première image i1.

Par exemple, la banque d'images i comprend des images du véhicule V acquises à une période de 66 millisecondes après le franchissement de la ligne d'infraction 11. La première image i1 est la première image du véhicule V acquise par le dispositif de contrôle 1. La deuxième image i2 est la septième image du véhicule V acquise par le dispositif de contrôle 1.

Selon l'étape de fusion 103, le calculateur génère une image fusionnée if comprenant une superposition en transparence de la première image i1 avec la deuxième image i2, l'image fusionnée if comprenant un premier véhicule V1 correspondant au véhicule V en la première position et un deuxième véhicule V2 correspondant au véhicule V en la deuxième position.

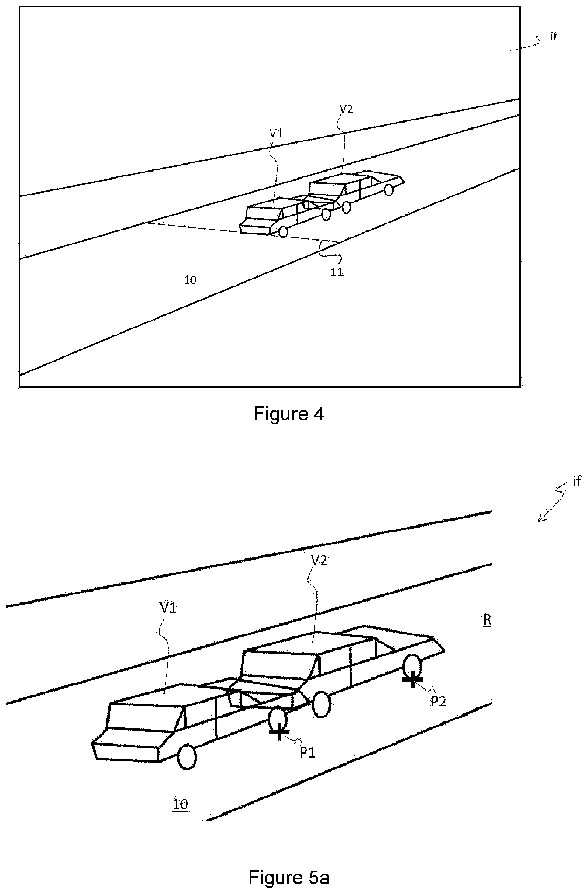

La figure 4 illustre une telle image fusionnée if, résultat de la superposition en transparence de la première image i1 illustrée à la figure 3a avec la deuxième image i2 illustrée à la figure 3b.

Par exemple, la superposition en transparence comprend une première mise en transparence de la première image i1 selon un taux de transparence compris entre 40% et 80%, une deuxième mise en transparence de la deuxième image i2 selon un taux de transparence compris entre 40% et 80% et une superposition des images issues des première et de deuxième mises en transparence.

Le taux de transparence pour la première image correspond à un premier taux de transparence, le taux de transparence pour la deuxième image correspond à un deuxième taux de transparence.

Par exemple, le premier taux de transparence est égal au deuxième taux de transparence.

L'avantage d'un premier taux de transparence égal au deuxième taux de transparence est d'obtenir la même visibilité sur le premier véhicule V1 que sur le deuxième véhicule V2 lorsqu'ils se chevauchent.

Par exemple le premier taux de transparence et le deuxième taux de transparence sont égaux à 2/3, soit 67% environ.

Par exemple, le premier taux de transparence est différent du deuxième taux de transparence.

Par exemple le premier taux de transparence est égal à 50% et le deuxième taux de transparence est égal à 75%.

Selon l'étape de sélection de pixels 104, le calculateur enregistre un premier pixel P1 du premier véhicule V1 et un deuxième pixel P2 du deuxième véhicule V2 sélectionnés dans l'image fusionnée if par un opérateur via l'interface homme-machine.

Un opérateur sélectionne dans l'image fusionnée if un premier pixel P1 du premier véhicule V1 et un deuxième pixel P2 du deuxième véhicule V2.

Par exemple, l'étape de sélection de pixels 104 comprenant une étape de grossissement de l'image fusionnée if. Ainsi, l'opérateur peut sélectionner avec une meilleure précision les premier et deuxième pixels P1, P2.

Comme représenté sur la figure 5a, l'image fusionnée if est grossie, un premier pixel P1 du premier véhicule V1 et un deuxième pixel P2 du deuxième véhicule V2 sont sélectionnés.

Par exemple, l'opérateur positionne deux curseurs dans l'image fusionnée if pour sélectionner les premier et deuxième pixels P1, P2.

Par exemple, le curseur est un pointeur en forme de croix pour une bonne précision de sélection, le pixel sélectionné étant celui localisé au centre de la croix.

Par exemple, le curseur est un pointeur en forme de flèche pour une bonne précision de sélection, le pixel sélectionné étant celui localisé à l'extrémité de la pointe de la flèche.

Avantageusement, le premier pixel P1 est situé en une première localisation sur le premier véhicule V1 et le deuxième pixel P2 est situé en une deuxième localisation sur le deuxième véhicule V2, la première localisation et la deuxième localisation sont identiques.

Suite à la sélection par l'opérateur, le calculateur enregistre le premier pixel P1 et le deuxième pixel P2, en particulier les coordonnées du premier pixel P1 et du deuxième pixel P2 dans le repère image de l'image fusionnée if.

Selon un premier mode de réalisation représenté sur la figure 5a, la première localisation et la deuxième localisation correspondent à un point de contact d'une des roues du véhicule avec le plan de la route R.

Ainsi, le premier pixel P1 et le deuxième pixel P2 sont localisés dans le plan de la route R.

La figure 5a illustre une première localisation et une deuxième localisation correspondant au point de contact de la roue avant droite du véhicule avec le plan de la route R.

Selon ce premier mode de réalisation, la fonction mathématique F connue du calculateur permet de déterminer un point réel Pr à partir d'un point image Pi et du plan affine étant le plan de la route R.

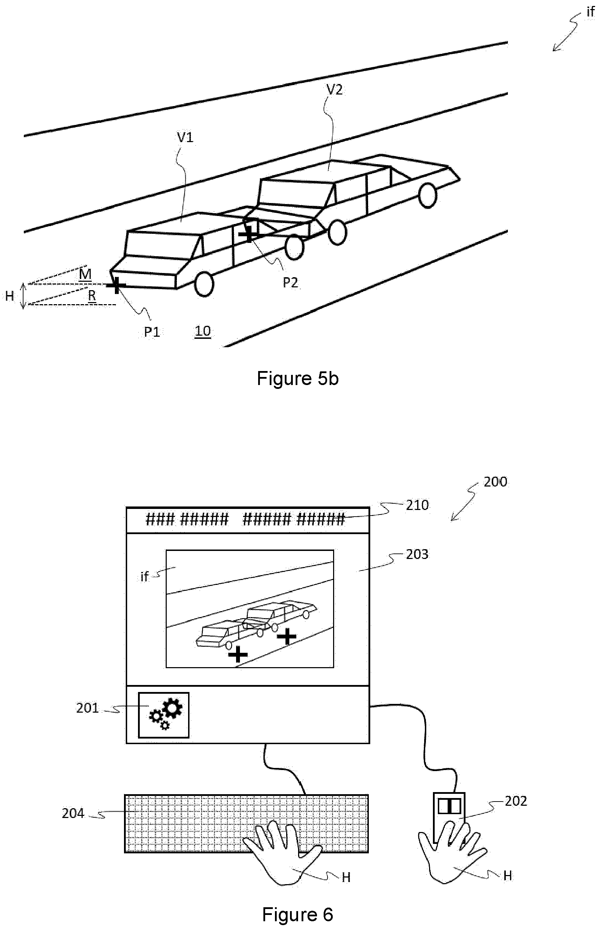

Selon un deuxième mode de réalisation représenté sur la figure 5b, la première localisation et la deuxième localisation correspondent à un point localisé sur la carrosserie du véhicule.

Ainsi, le premier pixel P1 et le deuxième pixel P2 sont localisés dans un plan de mesure M parallèle au plan de la route R et distant d'une hauteur H dudit plan de la route R.

La figure 5b illustre une première localisation et une deuxième localisation correspondant au bas de caisse arrière gauche du véhicule V.

On peut citer d'autres exemples de première et deuxième localisations : un coin, un bord ou un centre de la plaque d'immatriculation, d'un vitrage, d'un indicateur lumineux, d'un phare, d'un ouvrant, ou encore l'antenne, une poignée d'ouvrant, un rétroviseur, un logo, un motif sur la carrosserie ou un vitrage...

Selon ce deuxième mode de réalisation, la fonction mathématique F connue du calculateur, permet de déterminer un point réel Pr à partir d'un point image Pi et du plan affine étant le plan de mesure M.

Le calculateur a besoin de connaître la hauteur H du plan de mesure M par rapport au plan de la route R, pour déterminer un point réel Pr à partir d'un point image Pi.

Ainsi, selon l'étape d'enregistrement 105, le calculateur enregistre une hauteur H à laquelle est localisé le plan de mesure M par rapport au plan de la route R.

Selon une première variante, la hauteur H est renseignée par un opérateur via l'interface homme-machine.

Par exemple, l'opérateur mesure la hauteur H sur le véhicule dans le monde réel. En effet, lors de la contestation d'une infraction, le véhicule V est à disposition de l'opérateur, qui peut effectuer des mesures en grandeur réelle.

Selon une deuxième variante, la hauteur H est déterminée par le calculateur.

Par exemple, le calculateur dispose d'une base de données de modèles de véhicules, chaque modèle étant associé à des données dimensionnelles. Le calculateur peut déterminer la hauteur du plan H :
- par reconnaissance du modèle du véhicule V dans la première image i1, dans la deuxième image i2 et/ou dans l'image fusionnée if,
- par détermination des première et deuxième localisations sur le véhicule V,
- et l'aide de la base de données de modèles de véhicules.

La reconnaissance du modèle du véhicule V et la détermination des première et deuxième localisations par le calculateur est par exemple réalisée à l'aide de réseaux de neurones.

L'étape d'enregistrement 105 est particulièrement avantageuse dans le cas de la deuxième variante.

Dans le cas de la première variante, l'étape d'enregistrement 105 est facultative. Si elle est réalisée, la hauteur H est égale à zéro.

La figure 6 illustre un exemple de dispositif de mesure de vitesse d'un véhicule 200.

Le dispositif de mesure de vitesse d'un véhicule 200 comprend un calculateur 201.

Le dispositif de mesure de vitesse d'un véhicule 200 comprend une interface homme-machine.

L'interface homme-machine comprend une souris 202 et un clavier 204 connectés au calculateur 201 et adaptés pour une utilisation par les mains H d'un opérateur.

L'interface homme-machine comprend un écran 203 apte à afficher des images telles que la première image i1, la deuxième image i2 et l'image fusionnée if.

Pour sélectionner les premier et deuxième pixels P1, P2, l'opérateur positionne par exemple deux curseurs dans l'image fusionnée if affichée à l'écran 203, à l'aide de la souris 202.

Pour renseigner la hauteur H, l'opérateur utilise le clavier 204.

L'écran 203 permet à l'opérateur de contrôler le positionnement des curseurs et le renseignement de la hauteur H.

Par exemple, l'écran 203 comprend une zone dédiée 210 permettant au calculateur d'afficher des consignes à l'opérateur ou des résultats de calculs.

Si l'écran 203 est tactile, la souris 202 et le clavier 204 ne sont pas nécessaire.

Selon l'étape de calcul 106, le calculateur détermine la vitesse du véhicule en fonction du premier pixel P1, du deuxième pixel P2, de l'intervalle de temps prédéterminé et de la fonction mathématique F.

La fonction mathématique F permet au calculateur de déterminer un point réel Pr à partir d'un point image Pi et d'un plan affine contenant ledit point réel Pr.

Plus précisément, la fonction mathématique F permet au calculateur de déterminer des coordonnées d'un point réel Pr dans l'environnement réel du dispositif de contrôle 1, à partir des coordonnées d'un point image Pi dans un repère image et de la hauteur d'un plan affine contenant ledit point réel Pr, par rapport au plan de la route R.

Le premier pixel P1 et le deuxième pixel P2 sont des points image Pi qui correspondant à des points réels Pr compris dans le plan de la route R selon la variante 1, ou compris dans le plan de mesure M localisé à une distance H du plan de la route R selon la variante 2.

Le calculateur est donc apte à calculer une distance réelle entre les deux points réels Pr associés aux premier et deuxième pixels P1, P2.

Le calculateur peut ainsi en déduire la vitesse du véhicule V en divisant la distance réelle calculée grâce à la fonction mathématique F, par l'intervalle de temps prédéterminé.

La fonction mathématique F est associée à un modèle géométrique de la route comprenant deux lignes de délimitation de la route L1, L2 et une troisième ligne L3 correspondant à la ligne d'infraction 1.

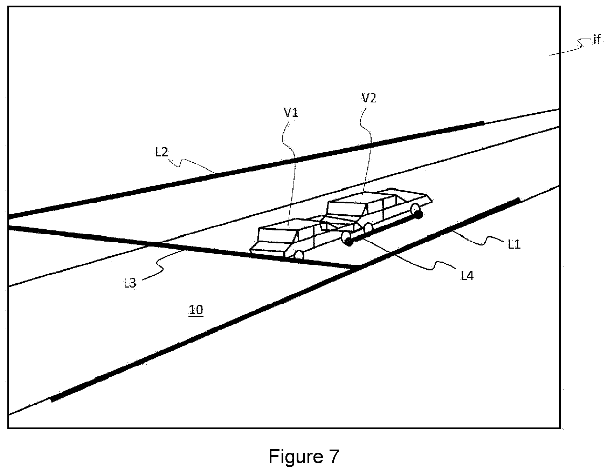

Comme illustré sur la figure 7, l'étape de calcul 106 comprend par exemple l'affichage à l'opérateur d'une ou plusieurs lignes du modèle géométrique de la route, en superposition de l'image fusionnée if. Cela permet à l'opérateur de contrôler visuellement la fonction mathématique F utilisée par le calculateur.

Si les deux lignes de délimitation de la route L1, L2 ne sont pas alignées avec les bords de la route 10, la fonction mathématique F est peut-être biaisée.

Par exemple, le dispositif de contrôle 1 a été déplacé sans être recalibré ou aligné correctement par rapport à la route 10.

Par exemple, une dérive dans le temps s'est produite et le dispositif de contrôle 1 doit être recalibré ou ré-aligné par rapport à la route 10.

Par exemple, le dispositif de contrôle 1 est défectueux.

Avantageusement, l'étape de calcul 106 comprend l'affichage à l'opérateur d'une quatrième ligne représentant la distance entre le premier pixel P1 et le deuxième pixel P2, comme illustré sur la figure 7.

Cela peut permettre à l'opérateur de valider visuellement la sélection du premier pixel P1 et du deuxième pixel P2, en particulier que les premier et deuxième pixels sont localisés dans le plan de la route R ou dans un plan de mesure M parallèle au plan de la route R.

En outre, la quatrième ligne L4 représente dans l'image fusionnée if la distance parcourue par le véhicule V entre le premier instant de temps et le deuxième instant de temps. Un opérateur expérimenté peut vérifier visuellement la cohérence de la distance parcourue représentée dans l'image fusionnée, avec la vitesse du véhicule V calculée par le calculateur.

Avantageusement, l'étape de calcul 106 comprend l'affichage de la vitesse du véhicule V calculée par le calculateur.

Par exemple, la vitesse du véhicule est affichée dans la zone dédiée 210 de l'écran 203 du dispositif de mesure de vitesse d'un véhicule 200, tel que représenté sur la figure 6.

Selon l'étape de validation 107, le calculateur calcule une variation de la vitesse du véhicule V déterminée selon l'étape de calcul 106 par rapport à une vitesse préalablement déterminée par le dispositif de contrôle 1.

La vitesse préalablement déterminée par le dispositif de contrôle 1 est une vitesse mesurée par le capteur de vitesse du dispositif de contrôle 1, par exemple un capteur radar, un capteur lidar, ou une combinaison d'un capteur radar et d'un capteur lidar.

Le calculateur valide la vitesse déterminée par le dispositif de contrôle 1 si ladite variation est inférieure ou égale à un seuil prédéterminé.

Par exemple, la variation de vitesse est égale à la valeur absolue de la différence entre la vitesse du véhicule V déterminée selon l'étape de calcul 106 et de la vitesse préalablement déterminée par le dispositif de contrôle 1, multipliée par cent et divisée par la vitesse préalablement déterminée par le dispositif de contrôle 1.

La formule mathématique de la variation de vitesse correspondante est : VAR=I(S1-S2)lx100/S2, avec:
- VAR: la variation de vitesse,
- S1: la vitesse du véhicule V déterminée selon l'étape de calcul 106,
- S2: la vitesse préalablement déterminée par le dispositif de contrôle 1.

Le seuil prédéterminé est par exemple égal à 10%.

Dans le cadre d'une infraction de vitesse, lorsque le calculateur valide la vitesse déterminée par le dispositif de contrôle 1, l'infraction du véhicule V est confirmée.

L'étape de validation 107 comprend en outre avantageusement l'affichage à l'opérateur d'au moins un parmi :
- la variation de vitesse,
- la vitesse préalablement déterminée par le dispositif de contrôle 1,
- la vitesse du véhicule V déterminée selon l'étape de calcul 106,
- un résultat correspondant à la validation de la vitesse déterminée par le dispositif de contrôle 1 par rapport au seuil prédéterminé.

Le résultat correspondant à la validation de la vitesse déterminée par le dispositif de contrôle 1 par rapport au seuil prédéterminé est par exemple affiché par un indicateur de couleur, une couleur verte indiquant une variation de vitesse inférieure ou égale au seuil prédéterminé, une couleur rouge indiquant une variation de vitesse supérieure au seuil prédéterminé.

## Revendications

1. Procédé de mesure de vitesse semi-automatique d'un véhicule (V) sur une route (10), à l'aide d'un calculateur et d'une interface homme-machine, à partir d'une banque d'images (i) acquises par un dispositif de contrôle (1) de vitesse sur la route (10) par rapport à une ligne d'infraction (11) virtuelle localisée dans un plan de la route (R), un point image (Pi) dans une image (i) correspondant à un point réel (Pr) dans l'environnement réel du dispositif de contrôle (1), le calculateur disposant d'une fonction mathématique (F) permettant de déterminer un point réel (Pr) à partir d'un point image (Pi) et d'un plan affine contenant ledit point réel (Pr), le procédé comprenant les étapes suivantes :
- une étape de première sélection (101), dans laquelle le calculateur sélectionne dans la banque d'images, une première image (i1) comprenant le véhicule (V) localisé en une première position par rapport à la ligne d'infraction (11) et correspondant à une acquisition par le dispositif de contrôle à un premier instant de temps,
- une étape de deuxième sélection (102), dans laquelle le calculateur sélectionne dans la banque d'images, une deuxième image (i2) comprenant le véhicule (V) localisé en une deuxième position par rapport à la ligne d'infraction et correspondant à une acquisition par le dispositif de contrôle à un deuxième instant de temps distant d'un intervalle de temps prédéterminé du premier instant de temps,
- une étape de fusion (103), dans laquelle le calculateur génère une image fusionnée (if) comprenant une superposition en transparence de la première image (i1) avec la deuxième image (i2), l'image fusionnée (if) comprenant un premier véhicule (V1) correspondant au véhicule (V) en la première position et un deuxième véhicule (V2) correspondant au véhicule (V) en la deuxième position,
- une étape de sélection de pixels (104), dans laquelle le calculateur enregistre un premier pixel (P1) du premier véhicule (V1) et un deuxième pixel (P2) du deuxième véhicule (V2) sélectionnés dans l'image fusionnée (if) par un opérateur via l'interface homme-machine,
- une étape de calcul (106), dans laquelle le calculateur détermine la vitesse du véhicule en fonction du premier pixel (P1), du deuxième pixel (P2), de l'intervalle de temps prédéterminé et de la fonction mathématique (F).

2. Procédé de mesure selon la revendication 1, le premier pixel (P1) étant situé en une première localisation sur le premier véhicule (V1), le deuxième pixel (P2) étant situé en une deuxième localisation sur le deuxième véhicule (V2), la première localisation et la deuxième localisation étant identiques.

3. Procédé de mesure selon l'une quelconque des revendications précédentes, le premier pixel (P1) et le deuxième pixel (P2) étant localisés dans le plan de la route (R), le plan affine étant le plan de la route (R).

4. Procédé de mesure selon l'une quelconque des revendications 1 à 2, le premier pixel (P1) et le deuxième pixel (P2) étant localisés dans un plan de mesure (M) parallèle au plan de la route (R), le procédé comprenant en outre une étape d'enregistrement (105) dans laquelle le calculateur enregistre une hauteur (H) à laquelle est localisé le plan de mesure (M) par rapport au plan de la route (R), le plan affine étant le plan de mesure (M).

5. Procédé de mesure selon la revendication précédente, la hauteur (H) étant renseignée par un opérateur via l'interface homme-machine.

6. Procédé de mesure selon l'une quelconque des revendications précédentes, l'étape de sélection de pixels (104) comprenant une étape de grossissement de l'image fusionnée (if).

7. Procédé de mesure selon l'une quelconque des revendications précédentes, la superposition en transparence comprenant une première mise en transparence de la première image (i1), une deuxième mise en transparence de la deuxième image (i2) et une superposition des images issues des première et de deuxième mises en transparence.

8. Procédé de mesure selon l'une quelconque des revendications précédentes, comprenant une étape de validation (107) dans laquelle le calculateur calcule une variation de la vitesse du véhicule déterminée selon l'étape de calcul (106) par rapport à une vitesse préalablement déterminée par le dispositif de contrôle (1), le calculateur validant la vitesse déterminée par le dispositif de contrôle si ladite variation est inférieure ou égale à un seuil prédéterminé.

9. Produit programme d'ordinateur comprenant les instructions de programme mettant en oeuvre les étapes du procédé de mesure selon l'une quelconque des revendications précédentes, lorsque les instructions de programme sont exécutées par un ordinateur.

10. Dispositif de mesure de vitesse d'un véhicule (200), comprenant une interface homme-machine (204, 202, 203) et un calculateur (201) apte à mettre en oeuvre les étapes du procédé de mesure à partir d'une banque d'images (i) acquises par un dispositif de contrôle (1) selon l'une quelconque des revendications 1 à 8.
